# EUROPEAN PATENT APPLICATION

(11) **EP 4 803 494 A1**
(43) Date of publication of application: **09.09.2026**
(21) Application number: 25178902.0
(22) Date of filing: 26.05.2025
(51) Int. Cl.: C03C 8/16, C03C 8/24, H01M 8/0282

(54) **A METHOD OF PREPARING AN INTERMEDIATE PRODUCT FOR FABRICATING A COMPOSITE GASKET, AN INTERMEDIATE PRODUCT FOR FABRICATING A COMPOSITE GASKET, A METHOD OF FABRICATING A COMPOSITE GASKET, AND A COMPOSITE GASKET**

(30) Priority: 07.03.2025 PL 45142725
(71) Applicant: Instytut Energetyki - Panstwowy Instytut Badawczy, 01-330 Warszawa (PL)
(72) Inventor: Zurawska, Agnieszka, 03-991 Warszawa (PL); Naumovich, Yevgeniy, 00-716 Warszawa (PL); Yaremchenko, Aleksey, 3810-551 Aveiro (PT); Arias Serrano, Blanca Isabel, 10001 Cáceres (PT); Skrzypkiewicz, Marek, 05-126 Nieporet (PL); Kosiorek, Magdalena, 07-100 Wegrow (PL); Kupecki, Jakub, 03-982 Warszawa (PL)
(74) Representative: Bury & Bury

(57) **Abstract**

A method of preparing an intermediate product for fabricating a composite gasket, the intermediate product being a paste containing a powdered sealing material with additives, a solvent, a binder, and a plasticizer, comprising a step of preparing a powdered sealing material with an additive and a step of mixing the powdered sealing material with a solvent and a binder and a plasticizer, according to the invention is characterized in that in the step of preparing a powdered sealing material, strontium aluminate is used as an additive in a weight ratio of 10% to 60% of the total weight of the powdered sealing material, the strontium alum inate being provided in the form of a powder having particles with a size of 0.2 µm to 1 mm. The object of the invention is also an intermediate product for fabricating a gasket for a layered device, being a paste fabricated with the method of the invention, a method of fabricating a gasket from this intermediate product, and a gasket.

## Description

### Field of the invention

The invention concerns a method of preparing an intermediate product for fabricating a composite gasket, an intermediate product for fabricating a composite gasket, a method of fabricating a composite gasket, and a composite gasket, especially for devices with a layered structure operating at high temperatures.

### State of the art

Numerous technical devices in which heat or mass exchange occurs, or processes requiring a large, i.e., developed surface, such as catalytic or electrochemical processes, are advantageously made in a layered structure. The layers in such devices are connected through machine welding, soldering, welding, bending, gluing, production of electrochemically machined monoblocks, use of interlayer gaskets, and mechanical pressure, as well as other techniques. The above-mentioned techniques are associated with problems related to the need for large-scale production (machine welding, welding, bending), the need to engage specialized staff to perform the given connections (welding), or significant material waste (cutting out compression gaskets or electro-erosion). In addition, the use of gaskets enables filling certain spaces in the layered device, directing the flow of fluid (gases or liquids) in the selected direction, as well as the flow of the mixture of fluid with suspended particles.

For example, proper sealing is necessary in order to make a stack or other arrangement of multiple electrochemical cells, especially solid oxide cells (SOC). Due to the operating conditions, it is necessary to use high-temperature gaskets between the single repeating units of the stack and gas manifolds responsible for supplying reactants to the fuel and air compartments of the SOC stack. Due to the high operating temperature of SOCs (550-1000°C), as well as the presence of highly reducing and oxidizing reactants (fuel on one side and air or oxygen on the other side) and the necessary electrical insulation of the gaskets, the sealing material must maintain its properties over a wide range of operating temperatures and be characterized by numerous physical and chemical properties. In addition, if the thermal expansion coefficient of the gasket does not match the thermal expansion coefficient of the ceramic materials present in the SOC and the steel used as the interconnect and separator material, the gaskets used so far in the SOC stack are not durable.

To effectively utilize planar SOCs in a stack of such cells, or any systems using electrochemical cells, including SOFC stacks, SOE electrolyzers, reversible solid oxide cell (rSOC) stacks, direct carbon solid oxide fuel cell (DC-SOFC) stacks fed with gaseous or liquid or solid fuel, including coal or coal and biomass chars, solid oxide fuel assisted electrolyzers (SOFEC), co-electrolysis solid oxide electrolyzers (co-SOE), direct internal reforming solid oxide cell (DIR-SOFC) stacks, direct carbon assisted solid oxide fuel electrolyzers (DC-SOFEC), reactors combining SOCs with other electrochemical cells, including solid oxide cell-molten carbonate fuel cell (SOE-MCFC) reactors and electrolyzers for the production of synthetic fuels, it is necessary to use high-temperature gaskets between the single repeating unitsof the stack and gas manifolds responsible for supplying the reactants to the fuel and air compartments of the SOC stack. Due to the high operating temperature of SOCs (550-1000°C), the presence of highly reducing and oxidizing reagents (fuel on one side and air or oxygen on the other side), and the necessary electrical insulation of gaskets, conventional products do not work well. Dedicated gaskets are manufactured for this purpose, which are stable in a wide range of partial pressures of gas components (air and fuel) and chemically compatible with SOC materials. Additionally, the thermal expansion coefficient of the gasket must match the thermal expansion coefficient of the ceramic materials present in the SOC and the steel used as interconnect and separator material in the SOC stack.

The most commonly used material for sealing a SOC stack is glass, which is a highly viscous liquid at the cell operating temperature (glass softens under the stack operating conditions). Such glass must meet several requirements - its glass transition temperature T_{g} must be slightly lower than the cell operating temperature, and the softening temperature should be relatively low so that the glass joins the stack components well and does not flow out of the sealing area during stack operation. In addition, the glass must be resistant to strongly reducing and oxidizing cell operating conditions and not devitrify at the cell operating temperature, typically from one to several years of continuous operation. The glass gasket should also wet the stack elements well without significantly reacting with them, and it must be an electrical insulator.

Forming ready-to-use gaskets of target shapes from glass powder can be done using many methods, depending on the constraints of the SOC stack design. In the case of a stack design using corrugated interconnects, the gaskets can be fabricated using the tape casting method. This method produces a thin, flexible film from which gaskets of the desired shape are cut. The glass foil can be laminated on a support material such as micanite, which has both a mechanical and structural function, creating a multi-layer hybrid gasket consisting of alternating layers of glass and micanite, with the glass layers usually being the outer layers. In the state of the art, various methods of fabricating glass gaskets are known, including printing-based or additive manufacturing methods disclosed, for example, in EP3985767A1, KR20200061122A, KR20190045618A, KR20190045622A, KR20190045621A, KR102038603B1, or CN102386345.

At the operating temperature of the SOC stack, glass is a highly viscous liquid that provides adequate gas tightness, but has low mechanical strength and exhibits a tendency to compress. Due to this fact, the design of the device often requires the use of hybrid gaskets, i.e., using additional layers of reinforcing materials between the glass layers, such as micanite, vermiculite, or steel layers. Such additives complicate the process of fabricating gaskets.

There are known methods of fabricating glass gaskets, which are fabricated by preparing an intermediate product from glass powder and a solvent to obtain a paste, which is applied to the target element and given the desired shape, and then subjected to drying and heat treatment. An example of such a solution is disclosed in patent Pat.238936. Various application techniques are known, including 3D printing of the intermediate product, casting a tape from the intermediate product and cutting a gasket out of it, and applying the intermediate product through a stencil.

Powders of different particle sizes are used in various applications. The size of a substantially spherical powder particle is defined as the average diameter. The particles may, in particular, be grains or granules formed from aggregated grains.

Numerous additives improving the properties of glass used in gaskets are known in the art, added during the preparing process of the intermediate product from which the composite gasket is manufactured, e.g. EP1783107A1 discloses the use of a number of materials such as oxides of boron, aluminium, gallium, silicon, zinc, magnesium oxide (MgO), calcium oxide (CaO), aluminium oxide (Al₂O₃), zirconium oxide (ZrO₂), titanium oxide (TiO₂) or cerium oxide (CeO₂); strontium aluminate SrAl₂O₄ or Sr₃Al₂O₆; barium titanate (BaTiO₆), (BaTiO₃); calcium titanate (CaTiO₃); aluminium and/or aluminium and/or magnesium silicates, such as 2SiO₂·3Al₂O₃, cordierite Mg₂Al₄Si₅O₁₈, magnesium-aluminium spinel MgAl₂O₄; calcium titanate (CaTiO₃); calcium phosphates and their derivatives, such as hydroxy-ethylene and their derivatives, such as hydroxyapatite CA₁₀(PO₄)s(OH)₂ or tricalcium phosphate Ca₃(PO₄)₂; or perovskite-type materials, carbides or nitrides, including silicon carbide (SiC), boron nitride (BN), aluminium nitride (AIN) or silicon nitride (Si₃N₄), metal alloys or mixtures of the above.

However, the problem of sufficient mechanical strength of the gasket at the working temperature under the influence of pressure load, usually under pressure in the range of 0.5-5 MPa, has not yet been fully solved. Under such pressure, the gasket can undergo both short-term and long-term compression.. This makes it difficult to effectively design gaskets that perform structural functions and maintain the required thicknesses during the operation of the devices. The measure of compression is the compression ratio, defined as: w=(h₁ - h₂)/h₁·100%, where h₁ is the thickness of the gasket before heating and h₂ is the thickness of the gasket after heating. The value of this ratio depends on the technology of forming the gasket (3D printing, tape casting, etc.) and on the thickness of the target gasket. In practice, it turns out that a high compression ratio makes it difficult to form gaskets of greater thickness and reduces the precision of fabricating thinner gaskets. For example, in practice, it turns out that it is very difficult to obtain glass gaskets with a final thickness greater than 20 µm.

Glass gaskets fabricated using the 3D printing technique have a compression ratio of 95%, showing a large variation in production, i.e., between copies. In the case of glass gaskets fabricated using the tape casting technique, the compression ratio is about 85%.

### Problem to be solved

The invention aims to solve the problem of gasket strength by providing a material suitable for fabricating gaskets with a thickness exceeding 20 µm, ensuring higher mechanical strength than glass at an operating temperature of 550-1000°C, suitable for fabricating gaskets without additional support layers used in hybrid gaskets performing additional structural functions in devices being sealed, and reducing the compression ratio and improving its high repeatability in the fabricated gaskets.

### Summary of the invention

A method of preparing an intermediate product for fabricating a composite gasket, the intermediate product being a paste containing a powdered sealing material with an additive, a solvent, a binder and a plasticizer, according to the invention comprises a step of preparing a powdered sealing material with an additive, and a step of mixing the powdered sealing material with a solvent and a binder and a plasticizer. According to the invention, in the step of preparing a powdered sealing material, strontium aluminate is used as an additive in a weight ratio of 10% to 60% of the total weight of the powdered sealing material. Strontium aluminate is provided in the form of a powder having particles with a size of 0.2 µm to 1 mm. The addition of strontium aluminate reduces the compression factor and also ensures its repeatability in the copies of the gasket.

Preferably, strontium aluminate is used as an additive in a weight ratio of 10% to 15% of the total weight of the powdered sealing material. The strontium aluminate is provided in the form of a powder with a grain size of 0.2 to 0.7 µm. The intermediate product obtained in this way is well suited for relatively thin (tens of micrometers) gaskets made by 3D printing.

Preferably, strontium aluminate is used as an additive in a weight ratio of 25% to 35% of the total weight of the powdered sealing material. The strontium aluminate is provided in the form of a powder with a grain size of 0.2 to 2.3 µm, granulated to particles with a size of 50 to 150 µm. The intermediate product obtained in this way is well suited for gaskets fabricated by tape casting and cutting with a thickness of several hundred micrometers, even up to 300 µm.

Preferably, strontium aluminate is used as an additive in a weight ratio of 40% to 60% of the total weight of the powdered sealing material. Strontium aluminate is provided in the form of a powder with a grain size of 0.2 to 5.8 µm, granulated to particles with a size of more than 150 µm. The intermediate product obtained in this way is well suited for fabricating gaskets with a thickness of more than 300 µm by applying a paste of the intermediate product through a stencil.

Preferably, before preparing the powdered sealing material, the granulated strontium aluminate is subjected to sintering. A gasket made of an intermediate product containing sintered granules has increased mechanical strength. This involves an additional reduction in the compression ratio.

An intermediate product for fabricating a composite gasket for a layered device, being a paste containing a powdered sealing material, a solvent, a binder, and a plasticizer, according to the invention contains strontium aluminate in a weight ratio of 10% to 60% of the total weight of the powdered sealing material. The strontium aluminate is provided in the form of a powder containing particles of a size of 0.2 to 1000 µm. The intermediate product according to the invention has a repeatable and reduced compression ratio in relation to glass when being heated.

Preferably, the strontium aluminate particles are spherical granules with a particle size greater than or equal to 50 µm.

Preferably, the strontium aluminate granulate is a sintered strontium aluminate granulate.

A method of fabricating a composite gasket according to the invention is intended in particular for a device with a layered structure. The method according to the invention comprises a step of applying the shape of the gasket using the paste according to the invention, and next a step of drying and heating the applied gasket.

Preferably, the method according to the invention further comprises a step of cutting out the gasket.

A composite gasket made of a sealing material containing glass according to the invention is characterized in that the sealing material contains from 10% to 60% by weight of strontium aluminate in the form of a powder with particles of size in the range of 0.2 µm to 1 mm.

Preferably, the gasket comprises strontium aluminate in granules with a size from 50 to 150 µm.

Preferably, the gasket comprises strontium aluminate in granules with a size greater than 150 µm.

Preferably, the granules are sintered granules.

### Advantageous results of the invention

Ceramic reinforcement in the form of SrAl₂O₄ powder in a glass matrix has proven to be unexpectedly effective. This is especially true for BaO-Al₂O₃-SiO₂-CaO matrices and allows one to reduce or completely eliminate the need to manufacture hybrid gaskets, or at least to perform them in fewer technological steps. The glass-SrAl₂O₄ composite is characterized by better gas tightness than hybrid layered gaskets containing micanite, which may result in higher reliability of gaskets and the entire SOC stack, extending the lifetime of the device.

### Description of the drawing

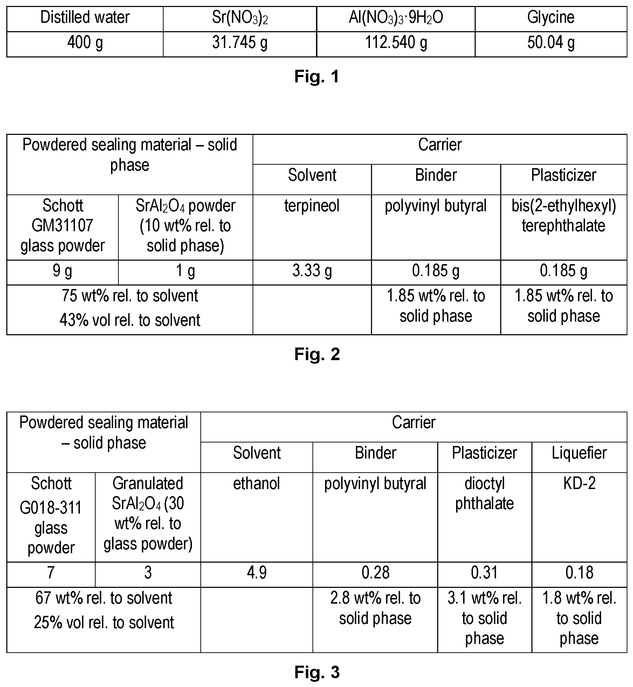

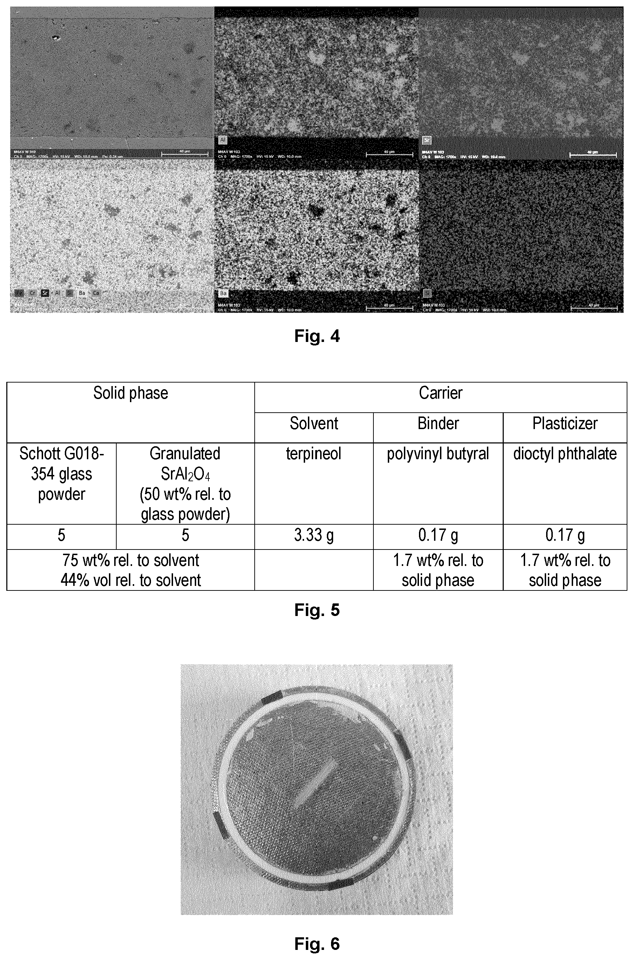

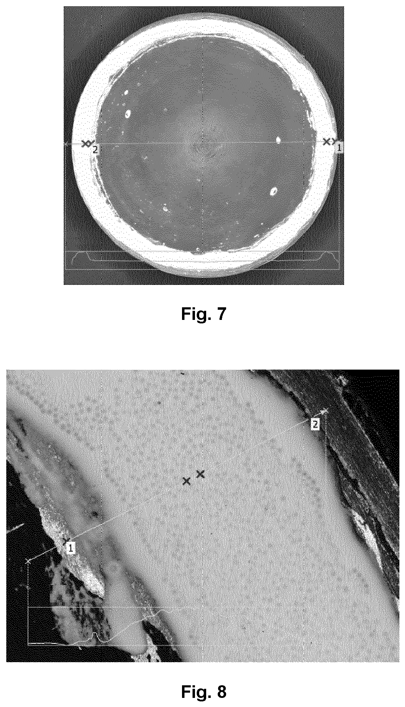

The subject of the invention has been explained below in embodiments described with reference to the attached figures, in which Fig. 1 shows a table presenting the composition of the mixture used to obtain the additive in the first embodiment of the invention, Fig. 2 shows the composition of the paste according to the first embodiment of the invention, Fig. 3 shows the composition of the suspension according to the second embodiment of the invention, Fig. 4 shows a SEM micrograph of a gasket obtained by the method according to the second embodiment, together with an EDS map illustrating the content of individual elements in the gasket, Fig. 5 shows the composition of the paste according to the third embodiment, Fig. 6 shows a stencil applied to the element being sealed, which was filled with the composite paste of the composition as in Fig. 3, Fig. 7 shows a raw gasket formed by removing the stencil from the surface being sealed and drying it, while Fig. 8 shows an enlarged view of a raw composite gasket with visible reinforcement in the form of sintered SrAl₂O₄ granulate, after drying the paste, before the step of heating the elements being sealed.

### Description of the embodiments

### Embodiment 1. A composite gasket (10 wt% SrAl₂O₄) with a thickness in the range of 25-50 µm for operation at a temperature of 700°C formed by 3D printing on a solid oxide electrochemical cell (SOC).

### Step 1 - preliminary - synthesis of strontium aluminate SrAl₂O₄

Ready-to-use strontium aluminate can be used, or synthesis can be carried out. In this embodiment, synthesis of pure phase of SrAl₂O₄ was carried out using the glycine-nitrate process (GNP) technique, a self-sustaining combustion synthesis using metal nitrates as oxidants and aminoacetic acid, so-called glycine, as a fuel and chelating agent, based on the general principle described by Chick L. A. et al in "Glycine-nitrate combustion synthesis of oxide ceramic powders", Materials Letters, 10, 1990, 6-12.

The starting materials used were Sr(NO₃)₂ of ≥ 99.0% purity, Al(NO₃)₃. 9H₂O of ≥ 98% purity and glycine of ≥ 99% purity. Distilled water was placed in a 2-liter laboratory beaker made of borosilicate glass, in which Sr(NO₃)₂ and Al(NO₃)₃·9H₂O were dissolved at room temperature, while stirring with a magnetic stirrer. Glycine was then added and dissolved while stirring at 25°C for 2 hours.

The beaker with the solution was heated on a hotplate set at 180°C until excess water evaporated and spontaneous ignition occurred. After combustion, the hotplate was turned off, and the beaker was cooled to room temperature.

The combustion product was removed from the beaker, crushed for 10 minutes using an agate mortar, placed in a crucible made of alumina, and then calcined in an electric muffle furnace in an air atmosphere at 900°C for 5 hours. The list of substrates used in addition to distilled water is shown in Fig. 1.

### Step 2 - preliminary - modification of the grain size of strontium aluminate powder SrAl₂O₄

Strontium aluminate can be purchased in the appropriate gradation, or grain size modification can be performed. In this embodiment, grain size modification was performed.

Strontium aluminate was placed in a crucible made of alumina and calcined again in an electric chamber furnace for 10 h in an air atmosphere at a temperature of 1300°C to produce a ceramic powder SrAl₂O₄ with a grain size of 0.2-0.7 µm. The heating and cooling rate during the heat treatment was 5°C/min. As a result of the synthesis, 30.84 g of the product was obtained with an apparent density of 3.35 g/cm³. The total mass loss resulting from the operations performed was 5-10% by weight, therefore, the final amount of the product was not less than 27.76 g.

The calcination temperature is of significant importance in the process of changing the grain size. For the final calcination at 1300°C, grain sizes of 0.2-0.7 µm were obtained, for calcination at 1400°C, it was 0.6-2.3 µm, and for calcination at 1500°C, it was 0.9-5.8 µm.

In order to obtain a gasket with a minimum thickness of 20-100 µm, it is advantageous to choose the finest grain size, for a thickness of 100-300 µm - the medium grain size, and for a thickness above 300 µm - the thickest grain size. The lower limit of the grain size of strontium aluminate, 0.2 µm coincides with the change in the physical properties of the final material, consisting of the transition between the state of suspension and colloid. Obtaining a suspension or paste is advantageous for gasket forming processes.

For thin gaskets it is important that the ceramic phase is as uniformly dispersed in the volume as possible, which is possible if the finest grain size is selected. For the thinnest gaskets, grains below 2 µm can also be used. In the case of the thinnest gaskets with a thickness of about 20 µm, a grain size modification step can be carried out, consisting of attrition milling and obtaining a grain size below 0.2 µm.

For gaskets with a thickness exceeding 150 µm, it is advantageous to extend the grain size modification route and include powder granulation process to obtain a size of 100-200 µm. Granulation consists of combining small particles into larger granules - agglomerates, in a controlled manner. This results in appearance of the areas with an increased content of ceramic additive in the gasket, which has a positive effect on the mechanical properties of the composite. This can be seen in Fig. 4.

### Step 3 - forming a composite gasket using 3D printing (direct ink writing method)

The obtained SrAl₂O₄ powder was mixed with Schott GM31107 glass powder so that strontium aluminate constituted 10% by weight to obtain a powdered sealing material. In tests of forming gaskets using 3D printing, intermediate products containing from 5% to 15% by weight of strontium aluminate appeared to be the most beneficial. The composition of the paste in this embodiment is shown in the table in Fig. 2. For gaskets fabricated using other techniques, substantially larger amounts of strontium aluminate can be used.

Next, an organic carrier was prepared, containing an organic solvent (terpineol), a binder (polyvinyl butyral), and a plasticizer (bis(2-ethylhexyl) terephthalate) in appropriate proportions, indicated in Fig. 2 for this embodiment. The weighed amounts of ingredients were placed in a container and mixed in a high-speed centrifugal mill at a speed of 2000 rpm for 20 minutes, with a 2-minute break after every 5 minutes of mixing.

Next, the carrier was mixed with the powdered sealing material (the solid phase) in such an amount that the solid phase constituted 75% by weight relative to the carrier solvent. This means 2.7 g of the solid phase per 1 g of the carrier. Mixing was carried out in a mill. Mixing was carried out at a speed of 2000 rpm for 20 minutes.

The paste prepared in this way was then placed in a 3D printer cartridge, and a path of a given shape was printed on the solid oxide cell which was a structural element of the electrochemical cell stack, outside the air electrode layer. The printing was carried out at room temperature.

Next, at a temperature of 50°C, the solvent evaporation process was carried out, i.e. the gasket was dried. The cell together with the gasket formed in this way, with a raw thickness (h₁) of 350 µm, was ready for the stack assembly.

### Step 4 - heat treatment.

The last step of fabricating a gasket was heat treatment, which was a step of the sealing procedure of a device, e.g., a stack. The sealing temperature depends primarily on the type of powdered sealing material used to produce the intermediate product. For the procedure based on Schott GM31107 glass powder, the sealing temperature is 740°C. The heating time at the sealing temperature was 2 h, and the applied compressive force was corresponding to 7 kg/cm². Other individually selected times and applied compressive force values are also permissible.

As a result, a gasket with an average thickness of 25-50 µm was obtained. The fabricated gasket eliminated the unevenness of the surface of the solid oxide cell and the adjacent steel element, maintaining a minimum thickness of 25 µm, and this effect was ensured by the addition of an electrically insulating ceramic phase.

The reduction in the compression ratio of the gasket in this embodiment is small, the compression ratio of the composite gasket with the addition of 10% by weight of strontium aluminate is in the range from 93% (for h₂=25 µm) to 86% (for h₂=50 µm), however, the key is the high repeatability of the gasket properties in the terms of compression and the possibility of obtaining areas with a thickness of >25 µm adapted to the unevenness of the elements being sealed. This effect is not possible to obtain using a glass gasket without the appropriate additive.

### Embodiment 2. A composite gasket connecting 5 mm steel plates enclosing repeatable solid oxide electrochemical cell modules with a thickness in the range of 100-200 µm, operating at a temperature of 800°C, formed by tape casting (30 wt% SrAl₂O₄, calcination temp. 1400°C)

### Step 1 - preliminary - synthesis of SrAl₂O₄

In this embodiment, strontium aluminate was synthesized as described above for embodiment 1. To obtain a different grain size, grain size modification was performed by calcination and subsequent granulation. Alternatively, strontium aluminate with the target grain size and/or granulation can be purchased.

### Step 2 - modification of the grain size of SrAl₂O₄ powder

In the next step, the product was placed in an alumina crucible and calcined again in an electric chamber furnace for 10 h in an air atmosphere at a temperature of 1400°C, to produce ceramic SrAl₂O₄ powder with a grain size of 0.6-2.3 µm.

The heating and cooling rate during the heat treatment was 5 °C/min. As a result of the synthesis, powder was obtained with an apparent density of 3.35 g/cm³. The mass loss resulting from the operations performed was in the range of 5-10% by weight, therefore the final amount of the product was not less than 27.76 g (the assumed amount was 30.84 g).

After calcination, the SrAl₂O₄ powder was mixed with a PVA binder in the amount of 5% by weight and pressed through a sieve with a mesh size of 80 µm to obtain the granulate. The PVA binder facilitated the formation of granules. This step ensured the appropriate homogeneity of the suspension prepared in the next step, as well as the composite film with the powder mixture. Additionally, it allowed one to obtain areas in the gasket with an increased content of SrAl₂O₄.

### Step 3 - forming a composite gasket using tape casting, cutting out the shape of the gasket and positioning the gasket on the element being sealed

The obtained SrAl₂O₄ granulate was mixed with Schott G018-311 glass powder, so that the granulate constituted 30% by weight. In tests of forming gaskets with a target thickness in the range of 100-200 µm by the tape casting method, the best proportions were from 25% to 35%.

The carrier was obtained by mixing ethanol (solvent), polyvinyl butyral (binder), KD2 (dispersant), and dibutyl phthalate (plasticizer) in a weight ratio of 10:0.57:0.36:0.63 in a high-speed centrifugal mixer at a speed of 2000 rpm for 10 min. The intermediate product intended for tape casting should have a suspension of lower viscosity with a simultaneous high content of the solid phase. The dispersant affected the stabilization of powders in the suspension, resulting in a reduction in viscosity.

Next, the powder mixture was taken in a weight ratio of 10:4.9 relative to the amount of solvent, added to the ingredients in the grinding bowl, and mixed again at 2000 rpm for 30 min, with a 2 min break after every 5 min of mixing. The composition of the suspension for tape casting according to the embodiment is shown in Fig. 3.

The suspension prepared in this way was poured onto a polyester film covering the working field of the tape-caster, using a doctor blade with a calibrated gap of 400 µm. Drying was carried out at room temperature for 12 h. The thickness shrinkage associated with the forming of the composite film was approx. 45%, so the thickness of the raw composite film h₁ was approx. 220 µm.

A given shape of the gasket was cut out of the composite film by cutting on a laser plotter, and then it was placed on the element being sealed, i.e., a steel plate separating the repeatable modules in the stack of solid oxide electrochemical cells. Due to the production conditions, the 5 mm thick plate is not perfectly flat and parallel, the deviation is usually from 10 to 100 µm. Another repeatable module was placed on the plate with the gasket.

### Step 4 - heat treatment.

The last step of fabricating the gasket was heat treatment, which was a step of the stack sealing procedure. For the procedure based on Schott G018-311 glass powder, the sealing temperature was 820°C. The sealing time at the sealing temperature was 1 h, and the applied compressive force corresponded to 8 kg/cm².

As a result, a gasket was obtained with a thickness at the working temperature of not less than 100 µm, the average thickness of which was in the range of 100-200 µm. The gasket fabricated in this way leveled the unevenness of the plates, maintaining its minimum thickness, ensured by the addition of an electrically insulating ceramic phase. SEM micrograph of the gasket combined with EDS map presenting areas containing individual main elements: Al, Sr, Si, and Ba is shown in Fig. 4. Areas of occurrence of Al and Sr elements correspond to gasket reinforcement made of SrAl₂O₄, while areas of occurrence of Si and Ba correspond to glass matrix. The image confirms the occurrence of gasket areas rich in SrAl₂O₄ with a size of approx. 10 µm.

The composite gasket with a content of 30% by weight of SrAl₂O₄ in granulated form made by tape casting is characterized by a compression ratio from 54% (h₂ = 100 µm) to 10% (h₂ = 200 µm), so the addition of strontium aluminate causes a significant reduction in the compression ratio. This enables the production of a gasket with a thickness exceeding 100 µm with high repeatability, which cannot be achieved using a glass gasket without the appropriate additives and with the appropriate grain size. In addition, it enables effective sealing of steel plates with a large deviation from flat parallelism, in the order of 10-100 µm, which significantly facilitates the technological process of component production. A glass gasket does not provide this effect either.

### Embodiment 3. A composite gasket connecting structural repeatable steel elements of a stack of solid oxide electrochemical cells with a thickness in the range of 350-400 µm operating at a temperature of 840°C, formed by applying paste on a stencil (50 wt% SrAl₂O₃ relative to glass powder, calcination temp. 1500°C + granulation)

### Step 1 - synthesis of SrAl₂O₄

In this embodiment, the synthesis of strontium aluminate was carried out as described above for embodiments 1 and 2. To obtain a different grain size, grain size modification was performed by calcination and granulation. Alternatively, strontium aluminate with the target grain size and/or granulation can be purchased in the form of sintered beads.

### Step 2 - modification of the grain size and granulation of SrAl₂O₄ powder

Strontium aluminate was placed in an alumina crucible and calcined in an electric chamber furnace for 10 h in an air atmosphere at a temperature of 1500°C to produce ceramic SrAl₂O₄ powder with a grain size in the range of 0.9-5.8 µm. The heating and cooling rate during the heat treatment was 5 °C/min. The synthesis should have given 30.84 g of product with a density of 3.35 g/cm³. The total mass loss resulting from the operations performed was 5-10% by weight, therefore, the final amount of the product was not less than 27.76 g.

After calcination, the SrAl₂O₄ powder was mixed with a PVA binder in the amount of 5% by weight and pressed through a sieve with a mesh size of 300 µm to obtain granulate, which was then heated at a temperature of 1200°C for 2 h. In practice, the use of a temperature in the range of 800 to 1500°C works well to obtain sintered granulate. Sintering increases the strength of the granulate. The glass phase and hard ceramic particles remain in the produced gasket, which will not be broken down into smaller grains during the preparation of the intermediate product.

### Step 3 - forming a composite gasket by applying paste directly on the element being sealed

The obtained SrAl₂O₄ granulate was mixed with Schott GM31107 glass powder, so that the granulate constituted 50% by weight. In practice, in the technique of applying the paste on the stencil, the most beneficial intermediate products were those containing from 40% to 60% by weight of strontium aluminate.

Next, an organic carrier was prepared, containing an organic solvent (terpineol), a binder (polyvinyl butyral), and a plasticizer (dioctyl phthalate). The weighed amounts of ingredients were placed in a dedicated container and mixed in a high-speed centrifugal mill at a speed of 2000 rpm for 20 min, with a 2-min break after every 5 min of mixing. Then the carrier was mixed with the powdered sealing material containing SrAl₂O₄ granulate in such an amount that the solid phase constituted 75% by weight relative to the solvent. This means 2.7 g of the solid phase per 1 g of the carrier. The obtained material was placed in a mill and mixed at a speed of 2000 rpm for 20 min. The paste prepared in this way was applied to a stencil of a dedicated shape with a thickness of 800 µm, applied to the surface of the steel element being sealed, and the excess paste was removed with a knife.

Next, the solvent evaporation process was carried out, i.e., the gasket was dried at a temperature selected for the solvent evaporation temperature, in this case 55°C. During drying, the gasket thickness was reduced to h₁ = 450 µm. The element, together with the gasket, formed in this way, was ready for assembly of the stack.

Fig. 6 shows a stencil placed on the element being sealed, which was filled with a composite paste with the composition as in Fig. 5, Fig. 7 shows a raw gasket formed by removing the stencil from the surface being sealed and drying it, while Fig. 8 shows an enlarged view of the raw gasket with visible reinforcement in the form of sintered SrAl₂O₄ granulate, after drying the paste, before the step of heating the elements being sealed.

### Step 4 - heat treatment

The last step of fabricating the gasket was heat treatment, which was a step of the stack sealing procedure. For the procedure based on Schott G018-354 glass powder, the sealing temperature was 860°C. The sealing time at the sealing temperature was 1.5 h, and the pressure was 6 kg/cm².

As a result, a gasket was obtained with a thickness at the working temperature of not less than 350 µm, the average thickness of which was in the range of 350-400 µm. The gasket made in this way eliminated the unevenness of the structural elements, maintaining its minimum thickness, ensured by the addition of an electrically insulating ceramic phase with increased mechanical strength.

The composite gasket with 50% by weight of SrAl₂O₄ in the form of sintered granules fabricated by applying the paste to a stencil is characterized by a compression ratio of 22% (h₂= 350 µm) to 11% (h₂= 400 µm), so increasing the strontium aluminate content causes a further reduction in the compression ratio of the gasket. It enables the production of a gasket with a thickness exceeding 350 µm with high repeatability, which cannot be achieved using a glass gasket or using additives with improper grain size.

The invention is not limited to SrAl₂O₄. The inventors have noticed that various strontium aluminates can be used to solve the technical problem to be solved. For example, instead of SrAl₂O₄, one can use SrAl₁₂O₁₉ or SrAl₄O₇.

### Industrial applicability of the invention

Ceramic additive for sealing glasses for layered devices operating at high temperatures, in the form of strontium aluminate SrAl₂O₄ in granulated form, allows one to control the deformation of a gasket under the operating conditions of the device without adversely affecting its gas tightness, ensuring high gasket density after heat treatment (porosity <5%). This additive is compatible with glass in application for sealing SOC due to matched thermal expansion coefficient, the value of which is 9.2-11.5×10⁻⁶ K⁻¹ at a temperature of 60-1100°C and is in a similar range as for dedicated glass, ferritic steel, e.g., Crofer 22APU and solid electrolyte 8YSZ. The ceramic phase behaves as a chemically inert additive, it does not affect the expected crystallization of glasses. A characteristic feature of a glass-based gasket is the compression ratio of the gasket, defined as the difference between the initial thickness of the raw gasket during assembly of the device, e.g., SOC stack or electrolyzer, and the thickness of the gasket during high-temperature operation. The compression ratio of a pure glass gasket is very high. It can be reduced by adding SrAl₂O₄ powder in a proportion corresponding to the desired compression level. The exact proportions of glass and powder should be selected experimentally, depending on the required application needs, preferably in the range of 10-60% by weight of SrAl₂O₄ relative to the weight of the glass. Such proportions allow one to obtain a paste and suspension suitable for use in typical processes of fabricating glass and composite gaskets.

Other experiments have shown that gaskets with a thickness of 1000 µm and greater can be obtained using the invention.

The invention has also proven useful for a thickness lower than 50 µm due to unexpected improvement in mechanical properties and high repeatability of the compression ratio.

Forming a gasket with the developed additive may take place using any method for forming such gaskets, depending on the application, e.g., by tape casting, screen printing, use of a stencil, direct ink writing, or robocasting.

## Claims

1. A method of preparing an intermediate product for fabricating a composite gasket, the intermediate product being a paste containing a powdered sealing material with additives, a solvent, a binder, and a plasticizer, wherein the method comprises
a step of preparing a powdered sealing material containing glass and an additive, and
a step of mixing the powdered sealing material with a solvent and a binder, and a plasticizer
**characterized in that**
in the step of preparing a powdered sealing material, strontium aluminate is used as an additive in a weight ratio of 10% to 60% of the total weight of the powdered sealing material,
the strontium aluminate is being provided in the form of a powder having particles with a size of 0.2 µm to 1 mm.

2. The method according to claim 1, wherein strontium aluminate is used as an additive in a weight ratio of 10% to 15% of the total weight of the powdered sealing material, the strontium aluminate being provided in the form of a powder with a grain size of 0.2 to 0.7 µm.

3. The method according to claim 1, wherein strontium aluminate is used as an additive in a weight ratio of 25% to 35% of the total weight of the powdered sealing material, the strontium aluminate being provided in the form of a powder with a grain size of 0.2 to 2.3 µm granulated to particles with a size of 50 to 150 µm.

4. The method according to claim 1 wherein strontium aluminate is used as an additive in a weight ratio of 40% to 60% of the total weight of the powdered sealing material, the strontium aluminate being provided in the form of a powder with a grain size of 0.2 to 5.8 µm granulated to particles with a size of more than 150 µm.

5. The method according to claim 3 or 4, wherein before preparing the powdered sealing material, the granulated strontium aluminate is subjected to sintering.

6. An intermediate product for fabricating a composite gasket for a layered device being a paste containing a powdered sealing material, a solvent, a binder, and a plasticizer
**characterized in that**
it contains strontium aluminate in a weight ratio of 10% to 60% of the total weight of the powdered sealing material,
the strontium aluminate being provided in the form of a powder comprising particles of a size of 0.2 to 1000 µm.

7. The intermediate product according to claim 6, wherein the strontium aluminate particles are spherical granules with a size greater than or equal to 50 µm.

8. The intermediate product according to claim 7, wherein the strontium aluminate granulate is a sintered strontium aluminate granulate.

9. A method of fabricating a composite gasket, in particular for a device having a layered structure, comprising a step of applying a paste as defined in claims 6 to 8 to form it into a shape of the gasket, and next a step of drying and heating the applied gasket.

10. The method according to claim 9 further comprising a step of cutting out the gasket.

11. A composite gasket made of a sealing material containing glass **characterized in that** the sealing material contains from 10% to 60% by weight of strontium aluminate in a form of a powder with particles of size in the range of 0.2 µm to 1 mm.

12. The composite gasket according to claim 11 comprising strontium aluminate in granules with a size of 50 to 150 µm.

13. The composite gasket according to claim 11 comprising strontium aluminate in granules with a size greater than 150 µm.

14. The composite gasket according to claim 12 or 13, wherein the granules are sintered granules.

## Amended claims

### Amended claims in accordance with Rule 137(2) EPC.

1. A method of preparing an intermediate product for fabricating a composite gasket, the intermediate product being a paste containing a powdered sealing material with additives, a solvent, a binder, and a plasticizer, wherein the method comprises
a step of preparing a powdered sealing material containing glass and an additive, and
a step of mixing the powdered sealing material with a solvent and a binder, and a plasticizer
**characterized in that**
in the step of preparing a powdered sealing material, strontium aluminate is used as an additive either
in a weight ratio of 25% to 35% of the total weight of the powdered sealing material, the strontium aluminate being provided in the form of a powder with a grain size of 0.2 to 2.3 µm granulated to particles with a size of 50 to 150 µm, or
in a weight ratio of 40% to 60% of the total weight of the powdered sealing material, the strontium aluminate being provided in the form of a powder with a grain size of 0.2 to 5.8 µm granulated to particles with a size of more than 150 µm.

2. The method according to claim 1, wherein before preparing the powdered sealing material, the granulated strontium aluminate is subjected to sintering.

3. An intermediate product for fabricating a composite gasket for a layered device being a paste containing a powdered sealing material, a solvent, a binder, and a plasticizer
**characterized in that**
it contains strontium aluminate in a glass matrix,
either
in a weight ratio of 25% to 35% of the total weight of the powdered sealing material, the strontium aluminate being provided in the form of a powder with a grain size of 0.2 to 2.3 µm granulated to particles with a size of 50 to 150 µm,
or
in a weight ratio of 40% to 60% of the total weight of the powdered sealing material, the strontium aluminate being provided in the form of a powder with a grain size of 0.2 to 5.8 µm granulated to particles with a size of more than 150 µm.

4. The intermediate product according to claim 3, wherein the strontium aluminate granulate is a sintered strontium aluminate granulate.

5. A method of fabricating a composite gasket, in particular for a device having a layered structure, comprising a step of applying a paste as defined in claims 3 or 4 to form it into a shape of the gasket, and next a step of drying and heating the applied gasket.

6. The method according to claim 5 further comprising a step of cutting out the gasket.

7. A composite gasket made of a sealing material containing glass **characterized in that** the sealing material contains strontium aluminate
either
in a weight ratio of 25% to 35% of the total weight of the powdered sealing material, the strontium aluminate being provided in the form of a powder with a grain size of 0.2 to 2.3 µm granulated to particles with a size of 50 to 150 µm,
or
in a weight ratio of 40% to 60% of the total weight of the powdered sealing material, the strontium aluminate being provided in the form of a powder with a grain size of 0.2 to 5.8 µm granulated to particles with a size of more than 150 µm.

8. The composite gasket according to claim 7, wherein the granules are sintered granules.
